# EUROPÄISCHE PATENTSCHRIFT

(11) **EP 1 940 216 B1**
(45) Veröffentlichungstag und Bekanntmachung des Hinweises auf die Patenterteilung: **04.03.2015**
(21) Anmeldenummer: 06792246.8
(22) Anmeldetag: 23.09.2006
(51) Int. Cl.: A01G 3/025

(54) **HANDGEFÜHRTES ARBEITSGERÄT**
HAND-OPERATED TOOL
OUTIL À MAIN

(30) Priorität: 26.10.2005 DE 102005052209; 09.02.2006 DE 102006007268
(43) Veröffentlichungstag der Anmeldung: 09.07.2008
(73) Patentinhaber: HUSQVARNA AB, 561 82 Huskvarna (SE)
(72) Erfinder: BROBEIL, Achim, 89160 Dornstadt (DE); OFFENBERGER, Falk, 88471 Laupheim (DE); KEIM, Norbert, 89281 Altenstadt (DE)
(74) Vertreter: Finkele, Rolf
(86) Internationale Anmeldenummer: PCT/EP2006/009258
(87) Internationale Veröffentlichungsnummer: WO 2007/048475

(56) Entgegenhaltungen:
- WO-A-00/54571
- DE-U1- 8 401 128
- US-A- 5 933 965

## Beschreibung

Die Erfindung betrifft ein handgeführtes Arbeitsgerät mit einem schlanken, langgestreckten Gerätestiel, der zumindest zwei teleskopierbar ineinander schiebbare Stielabschnitte aufweist, wobei an einem Endbereich eines ersten Stielabschnitts zumindest eine bewegbare Arbeitseinrichtung und an einem davon abgewandten Endbereich eines zweiten Stielabschnitts zumindest ein relativ zum zweiten Stielabschnitt beweglich angebrachter Betätigungsgriff vorgesehen ist, der mittels eines flexiblen Zugmittels mit der Arbeitseinrichtung verbunden ist, um eine Übertragung von Betätigungskräften auf die Arbeitseinrichtung zu ermöglichen.

Aus dem Stand der Technik ist die deutsche Gebrauchsmusterschrift G 84 01 128 bekannt, die eine Gartenschere zum Abschneiden von Ästen mit einem an einem Stiel sitzenden Schneidkopf beschreibt. Ein den Schneidkopf tragender Stiel ist teleskopartig ausziehbar und kann mittels einer Fernbedienung, die als hydraulische Vorrichtung oder als Seilzug ausgeführt sein kann, angesteuert werden. Bei einer Verwendung eines Seilzugs wird vorgeschlagen, diesen in einem Hohlraum des Stieles unterzubringen und eine Umlenkrolle vorzusehen, die eine Umlenkung des am Schneidkopf befestigten Seilzugs in den Stiel ermöglicht. Das dem Schneidkopf abgewandte Ende des Seilzugs ragt aus dem Stiel heraus und ist mit einer Schlaufe versehen, die die Einleitung einer Betätigungskraft ermöglicht.

Aus dem Stand der Technik ist auch ein handgeführtes Arbeitsgerät bekannt, bei dem eine bewegbare Arbeitseinrichtung an einem ersten Stielabschnitt eines teleskopierbaren Gerätestiels angebracht ist, während ein schiebebeweglicher Betätigungsgriff an einem zweiten Stielabschnitt des Gerätestiels angebracht ist. Der Betätigungsgriff ist mit der Arbeitseinrichtung über ein Zugmittel verbunden, das ausgehend vom Betätigungsgriff längs des Gerätestiels verläuft, um eine Übertragung einer Betätigungskraft auf die Arbeitseinrichtung zu ermöglichen. Das Zugmittel ist zwischen dem Betätigungsgriff und der Arbeitseinrichtung im Wesentlichen außerhalb des Gerätestiels geführt und ist dadurch Umgebungseinflüssen ausgesetzt, die zu einer Beschädigung oder Verhakung des Zugmittels führen können.

Aus dem US-Patent US 5 993 965 A ist ein handgeführtes Arbeitsgerät bekannt, welches zwei teleskopierbar ineinander schiebbare Stielabschnitte zeigt. Hierbei weist das Arbeitsgerät an einem Endbereich des ersten Stielabschnittes eine Arbeitseinrichtung auf, während sich an dem zweiten Stielabschnitt ein daran beweglich angebrachter Betätigungsgriff befindet, mittels welchem über ein flexibles Zugmittel eine Übertragung der Betätigungskräfte auf die Arbeitseinrichtung ermöglicht wird. Das eine Ende des Zugmittels ist an dem zweiten Stielabschnitt fixiert, während das andere Ende an dem beweglichen Zugmittel befestigt ist. Um einen Längenausgleich des Zugmittels bei einer Längenänderung des Gerätestiels zu gewährleisten, erfolgt eine Umlenkung des Zugmittels an den benachbart angeordneten Stirnbereichen der ineinander geschobenen Stielabschnitte. Während sich in der bevorzugten Ausgestaltung des Patentgegenstandes der Betätigungsgriff am unteren Ende des zweiten Stielabschnittes befindet, zeigen zwei alternative Ausgestaltungen diesen einen Betätigungsgriff als ein ringförmiges Betätigungsmittel, welches den zweiten Stietabschnitt in einem weiter oben liegenden Bereich beweglich umschließt, um die Arbeitseinrichtung von dort aus zu betätigen.

Die Aufgabe der Erfindung besteht darin, ein handgeführtes Arbeitsgerät zu schaffen, das eine geschützte Unterbringung des Zugmittels und eine von einer Teleskopierung des Gerätestiels unabhängige, komfortable Bedienung ermöglicht.

Diese Aufgabe wird durch ein handgeführtes Arbeitsgerät der eingangs genannten Art gelöst, bei dem eine Umlenkung des Zugmittels an benachbart angeordneten Stirnbereichen der Stielabschnitte vorgesehen ist, um einen Längenausgleich des Zugmittels bei einer Längenänderung des Gerätestiels zu gewährleisten. Der Gerätestiel ist teleskopierbar, also längenvariabel, indem Stielabschnitte in Steckbereichen ineinander gesteckt und relativ zueinander verschiebbar angeordnet sind. In den Steckbereichen weisen die Stielabschnitte jeweils benachbart angeordnete Stirnbereiche auf, die abhängig von der Teleskopierung, also der vom Benutzer eingestellten Länge des Gerätestiels, mehr oder weniger weit voneinander entfernt angeordnet sind. Durch eine Umlenkung des Zugmittels, das insbesondere als flexibles Band oder als Rundschnur oder als Seil aus einem Kunststoffmaterial, aus natürlichen Fasern, aus Metall oder einer Kombination dieser Werkstoffe hergestellt sein kann, an den Stirnbereichen der Stielabschnitte, kann das Zugmittel vorteilhaft in einen durch die Stielabschnitte begrenzten Hohlraum geführt werden, in dem keine schädlichen äußeren Einflüsse auf das Zugmittel einwirken. Dabei kann vorgesehen werden, dass das an dem Betätigungsgriff befestigte Zugmittel durch eine stirnseitige Umlenkung an dem zweiten Stielabschnitt in einen Spalt zwischen dem ersten und den zweiten Stielabschnitt hineingeführt wird. Um eine ergonomische Betätigung des Arbeitsgeräts sicherzustellen und einen selbsttätigen Längenausgleich des Zugmittels unabhängig von der Teleskopierung des Gerätestiels zu erlauben, ist eine weitere Umlenkung des Zugmittels am Stirnbereich des ersten Stielabschnitts vorgesehen.

In Ausgestaltung der Erfindung ist vorgesehen, dass an den Stirnbereichen der benachbart zueinander angeordneten Stielabschnitte jeweils Umlenkeinrichtungen für eine Umlenkung des Zugmittels vorgesehen sind. Die Umlenkeinrichtungen sind vorgesehen, um das Zugmittel mit geringer Reibung und unter Vermeidung von Beschädigungen unter Last, also bei Übertragung von Zugkräften, um den Stirnbereich des Stielabschnittes herumzulenken. Da die Stielabschnitte bevorzugt als rohrförmige Abschnitte ausgeführt sind, dienen die Umlenkeinrichtungen zur Vermeidung von Beschädigungen durch gegebenenfalls scharfkantige Stirnseiten der Stielabschnitte. Zudem ermöglichen zumindest abschnittsweise zylindrisch gestaltete Umlenkeinrichtungen insbesondere bei bandförmigen Zugmitteln eine im Wesentlichen homogene Kraftübertragung über die Breite des Zugmittels, da das Zugmittel flächig auf der Umlenkeinrichtung aufliegen kann. Als Umlenkeinrichtungen kommen insbesondere Umlenkrollen zu Einsatz, die eine verschleiß- und reibungsarme Umlenkung des Zugmittels auf einem vorgebbaren Umlenkradius ermöglichen. Bei einer bevorzugten Ausführungsform ist eine drehbare Lagerung der Umlenkrolle an dem Stielabschnitt vorgesehen, so dass auch hohe Zugkräfte nahezu reibungsfrei übertragen werden können.

Weiterhin sieht die Erfindung vor, dass das Zugmittel im Endbereich des zweiten Stielabschnitts an einem bewegbar am zweiten Stielabschnitt angebrachten Zuggriff angebracht ist. Der als zweiter Betätigungsgriff ausgeführte Zuggriff ermöglicht die Einbringung einer Bedienkraft auf die Arbeitseinrichtung, auch wenn eine Betätigung des ersten Betätigungsgriffs unbequem oder unmöglich ist. Der Zuggriff kann insbesondere koaxial zu einer Mittelachse des Gerätestiels an dem zweiten Stielabschnitt angeordnet werden und vorzugsweise als rotationssymmetrisches Bauteil ausgeführt sein. Bevorzugt verläuft das Zugmittel ausgehend von der der Arbeitseinrichtung zugeordneten Umlenkrolle im Wesentlichen parallel zur Mittelachse des Gerätestiels zum Zuggriff, so dass eine im Wesentlichen reibungsfreie Kraftübertragung vom Zuggriff auf die Arbeitseinrichtung möglich ist.

In weiterer Ausgestaltung der Erfindung ist vorgesehen, dass der Arbeitseinrichtung eine Umlenkeinrichtung für eine Umlenkung des Zugmittels zugeordnet ist. Eine Umlenkeinrichtung an der Arbeitseinrichtung erlaubt es, das Zugmittel zur Ansteuerung der Arbeitseinrichtung zu nutzen, ohne eine Festlegung des Zugmittels an zen, ohne eine Festlegung des Zugmittels an der Arbeitseinrichtung zu benötigen. Dadurch kann in vorteilhafter Weise in Verbindung mit der Umlenkung des Zugmittels an dem Stirnbereich des ersten Stielabschnittes ein selbsttätiger Längenausgleich des Zugmittels bei einer Längenänderung des Gerätestiels verwirklicht werden. Die Umlenkeinrichtung kann insbesondere als Umlenkrolle ausgeführt werden, die über eine formstabile oder flexible Verbindung mit der Arbeitseinrichtung gekoppelt ist. Zudem lässt sich durch die Umlenkeinrichtung an der Arbeitseinrichtung eine Kraftverstärkung nach Art eines Flaschenzugs verwirklichen, da die Umlenkeinrichtung von zwei im Wesentlichen parallel verlaufenden Abschnitten des Zugmittels angelenkt wird. Diese doppelte Anlenkung bewirkt, dass bei Ausübung einer Zugkraft auf die Arbeitseinrichtung eine Verlagerung der zugeordneten Umlenkeinrichtung in Richtung der Zugkraft stattfindet, wodurch für den am Ende des Zugmittels angekoppelten Betätigungsgriff der doppelte Betätigungsweg gegenüber einer direkt mit der Arbeitseinrichtung gekoppelten Zugmittel auftritt. Somit wird zur Ansteuerung der Arbeitseinrichtung nur die halbe Kraft benötigt, die für die Bewegung einer direkt mit dem Zugmittel gekoppelten Arbeitseinrichtung notwendig wäre.

In weiterer Ausgestaltung der Erfindung ist vorgesehen, dass für das Zugmittel zwischen einer Befestigung am Betätigungsgriff und einer dem zweiten Stielabschnitt zugeordneten Befestigung zumindest drei Umlenkungen um jeweils zumindest nahezu 180 Grad vorgesehen sind. Damit kann eine Kombination aus einem selbsttätigen Längenausgleich für das Zugmittel und einer Kraftverstärkung für die Betätigung der Arbeitseinrichtung verwirklicht werden. Das Zugmittel wird zudem nur auf einem geringen Bruchteil seiner Länge und lediglich im Bereich des Betätigungsgriffs außerhalb des Gerätestiels geführt, so dass eine verschleißarme Führung des Zugmittels innerhalb des Gerätestiels nahezu für die gesamte Länge des Zugmittels sichergestellt ist. Durch die dreifache Umlenkung ist auch gewährleistet, dass eine durch die Schwenkund/oder Schiebebewegung des Betätigungsgriffs hervorgerufene Bewegung des Zugmittels im Bereich des Betätigungsgriffs zu einer gleichsinnigen Ansteuerung der Arbeitseinrichtung führt. Damit kann neben dem selbsttätigen Längenausgleich und der konstruktiv günstigen Ansteuerung der Arbeitseinrichtüng auch eine ergonomische Betätigung des Arbeitsmittels gewährleistet werden.

In weiterer Ausgestaltung der Erfindung ist vorgesehen, dass der erste Stielabschnitt mit einer zumindest teilweise über seine Längserstreckung vorgesehenen Profilierung versehen ist, die als Aufnahmeschacht für die radial nach innen weisende Umlenkeinrichtung des zweiten Stielabschnittes und für das Zugmittel vorgesehen ist. Damit kann eine besonders kompakte Bauweise des Gerätestiels verwirklicht werden. Der erste Stielabschnitt weist in einer orthogonal zu seiner Längserstreckung angeordneten Querschnittsebene eine radial nach innen gerichtete Ausnehmung auf, die sich zumindest über einen Teil der Länge des Stielabschnitts erstreckt. Diese Profilierung schafft einen freien Querschnitt zwischen dem ersten und der zweiten Stielabschnitt, so dass die Anbringung einer radial nach innen weisenden Umlenkeinrichtung an dem zweiten Stielabschnitt möglich ist, ohne eine Verschiebbarkeit der Stielabschnitte zu behindern. Zudem wird durch die Ausnehmung ein freier Querschnitt für das Zugmittel geschaffen, das zumindest abschnittsweise zwischen dem ersten und dem zweiten Stielabschnitt aufgenommen ist. Denkbar ist auch eine zusätzliche Anbringung eines in Längsrichtung verlaufenden Schlitzes in dem zweiten Stielabschnitt. Dieser Schlitz kann als Führungsschlitz für einen mit dem Betätigungsgriff verbundenen Zapfen dienen, an dem das Zugmittel endseitig angebracht ist. Der Zapfen und das Zugmittel verlaufen in der Profilierung des ersten Stielabschnitts, so dass eine vollständig im Gerätestiel aufgenommene Führung des Zugmittels verwirklicht werden kann.

In weiterer Ausgestaltung der Erfindung ist vorgesehen, dass das Zugmittel zumindest nahezu vollständig im Gerätestiel geführt ist. Damit wird erreicht, dass das Zugmittel schädlichen Einflüssen wie mechanischen Belastungen, Verschmutzungen oder der Einwirkung von Sonnenstrahlen, die zu einem erhöhten Verschleiß führen können, zumindest nahezu vollständig entzogen ist.

In weiterer Ausgestaltung der Erfindung ist vorgesehen, dass dem zweiten Stielabschnitt ein Zugmittelkanal zugeordnet ist, der für eine zumindest teilweise Abdeckung des in Richtung des Betätigungsgriffs verlaufenden Zugmittels vorgesehen ist. Der Zugmittelkanal dient als zumindest teilweise Abdeckung des Zugmittels im Bereich zwischen dem Betätigungsgriff und der Umlenkung an dem zweiten Stielabschnitt. In diesem Bereich verläuft das Zugmittel außerhalb des Gerätestiels und ist daher den Umgebungseinflüssen ausgesetzt. Um diese Umgebungseinflüsse auf das Zugmittel zu reduzieren, ist der Zugmittelkanal vorgesehen. Bei einer bevorzugten Ausführungsform der Erfindung ist der Zugmittelkanal als schachtförmiger Aufsatz auf den zweiten Stielabschnitt verwirklicht und umgibt das Zugmittel von der Umlenkung bis zum Betätigungsgriff, so dass schädliche Umgebungseinflüsse von Zugmittel ferngehalten werden können. Bei einer besonders bevorzugten Ausführungsform der Erfindung ist im zweiten Stielabschnitt eine Zugmittelnut vorgesehen, die von einer insbesondere aufgeclipsten oder aufgeschnappten Zugmittelabdeckung verschlossen wird und die mit dieser Zugmittelabdeckung den Zugmittelkanal bildet.

In weiterer Ausgestaltung der Erfindung ist vorgesehen, dass der Zugmittelkanal als Außenhülse ausgeführt ist, die den zweiten Stielabschnitt bereichsweise umgibt und dass das Zugmittel abschnittsweise zwischen der Außenhülse und dem zweiten Stielabschnitt geführt ist. Die Außenhülse umgreift den zweiten Stielabschnitt zumindest abschnittsweise in der Art einer Hülse. An einer zylindrischen Innenfläche der Außenhülse ist eine in axialer Richtung verlaufende Nut zur Aufnahme des Zugmittels vorgesehen, so dass für das Zugmittel eine im Wesentlichen reibungsfreie Bewegung zwischen Außenhülse und zweiten Stielabschnitt gewährleistet ist. Die fest mit dem ersten oder zweiten Stielabschnitt verbundene Außenhülse kann zudem mit einer stirnseitig vorgesehenen Führungs- und/oder Klemmeinrichtung für eine Arretierung des ersten Stielabschnitts versehen sein, so dass ihr gegebenenfalls eine Doppelfunktion zukommt.

In weiterer Ausgestaltung der Erfindung ist vorgesehen, dass der Zugmittelkanal, insbesondere die Außenhülse, als Anschlag zur Begrenzung eines Schiebeweges des Betätigungsgriffs vorgesehen ist. Der Betätigungsgriff und die Außenhülse können vorteilhaft so gestaltet werden, dass sie jeweils stirnseitig flächig aneinander grenzen. Die Außenhülse dient somit als Anschlag für eine Schiebebewegung des Betätigungsgriffs, was insbesondere bei einer Betätigung der Arbeitseinrichtung mittels des Zuggriffs von Bedeutung ist, da in diesem Fall der Betätigungsgriff über das Zugmittel mit der vom Benutzer aufgebrachten Betätigungskraft beaufschtagt wird und zur Vermeidung einer Fehlfunktion des Arbeitsgeräts eine zuverlässige Abstützung des Betätigungsgriffs sichergestellt sein muss.

In weiterer Ausgestaltung der Erfindung ist vorgesehen, dass das Zugmittel ausschließlich am Betätigungsgriff und am Zuggriff befestigt ist. Dadurch wird eine einfache Aufbauweise des Arbeitsgeräts sichergestellt, wobei die Enden des Zugmittels außerhalb eines von den Stielabschnitten begrenzten Hohlraums an dem Betätigungsgriff und dem Zuggriff angebracht sein können, so dass eine besonders einfache Montage des Zugmittels an den Betätigungsgriff und den Zuggriff gewährleistet ist.

Gemäß einem weiteren Aspekt der Erfindung ist vorgesehen, dass der zwischen einer Ruhestellung und einer Funktionsstellung verschiebbare Betätigungsgriff in zumindest einer Arretierungsstellung an dem Gerätestiel festlegbar ist. In der Ruhestellung ist die Arbeitseinrichtung typischerweise geöffnet und kann an einen zu bearbeitenden Gegenstand herangeführt werden. Bei der Überführung des Betätigungsgriffs aus der Ruhestellung in die Funktionsstellung wird über das Zugmittel eine Zugkraft auf die Arbeitseinrichtung ausgeübt, so dass diese vorzugsweise geschlossen werden kann und eine Arbeitskraft auf den Gegenstand ausüben kann. Dabei kann es insbesondere zu einem Trenn- oder Schneidvorgang durch eine oder mehrere Schneiden der Arbeitseinrich-. tung kommen. Durch die Festlegung des Betätigungsgriffs in einer Arretierstellung kann insbesondere für einen Transport des Arbeitsgeräts eine kompakte Transportstellung der Arbeitseinrichtung gewährleistet werden, in der beispielsweise die Schneide oder die Schneiden der Arbeitseinrichtung unzugänglich sind, so dass ein Verletzungsrisiko und ein Risiko von Beschädigungen durch die Arbeitseinrichtung vermindert werden kann.

In weiterer Ausgestaltung der Erfindung ist vorgesehen, dass dem Zugmittel und/oder dem Betätigungsgriff ein Zugmittelabschnitt zugeordnet ist, der für eine Festlegung des Betätigungsgriffs in der Arretierstellung, insbesondere in der Funktionsstellung, vorgesehen ist. Damit kann eine besonders einfache und wirkungsvolle Arretierung der Arbeitseinrichtung verwirklicht werden. Der Zugmittelabschnitt, der insbesondere als Zugmittelschlaufe in Verlängerung des Zugmittels ausgeführt sein kann, wird an einer insbesondere dem Gerätestiel zugeordneten Aufnahme, die in der Art eines Hakens oder eines Hinterschnitts ausgeführt sein kann, festgelegt. Typischerweise wird von der Arbeitseinrichtung eine Rückstellkraft auf das Zugmittel ausgeübt, so dass der Zugmittelabschnitt über den Betätigungsgriff oder das Zugmittel mit einer Zugkraft beaufschlagt ist und sicher in der Aufnahme gehalten werden kann. Vorzugsweise ist die Aufnahme an einem dem Benutzer zugewandten Endbereich unterhalb des Betätigungsgriffs am Gerätestiel vorgesehen.

In weiterer Ausgestaltung der Erfindung ist vorgesehen, dass eine Riegeleinrichtung für eine Arretierung des Betätigungsgriffs an dem Gerätestiel vorgesehen ist. Die Riegeleinrichtung kann am Betätigungsgriff und/oder am Gerätestiel ausgebildet sein und kann für eine stufenlose oder an vorgebbaren Positionen vornehmbare Arretierung zwischen Betätigungsgriff und Gerätestiel vorgesehen sein. Die Riegeleinrichtung kann beispielsweise in der Art eines Bajonettverschlusses verwirklicht werden, bei dem ein Riegelzapfen des Betätigungsgriffs in eine Riegelnut des Gerätestiels eingreift, sofern in der Arretierposition eine Verdrehung des Betätigungsgriffs um eine Mittellängsachse des Gerätestiels vorgenommen wird. Eine Aufhebung der Arretierung kann durch eine Verdrehung des Betätigungsgriffs in der entgegengesetzten Drehrichtung erfolgen. Dem Betätigungsgriff kann auch eine Riegeleinrichtung in der Art einer Spannzange zugeordnet sein, die durch eine Drehbewegung des Betätigungsgriffs um die Mittellängsachse des Gerätestiles geschlossen oder geöffnet werden kann und die eine stufenlose Feststellung des Betätigungsgriffs in einem Bereich zwischen der Ruhstellung und der Funktionsstellung ermöglicht.

Weitere Vorteile und Merkmale ergeben sich aus den Ansprüchen sowie der nachfolgenden Beschreibung eines bevorzugten Ausführungsbeispiels, das anhand der Zeichnung dargestellt ist. Dabei zeigt:

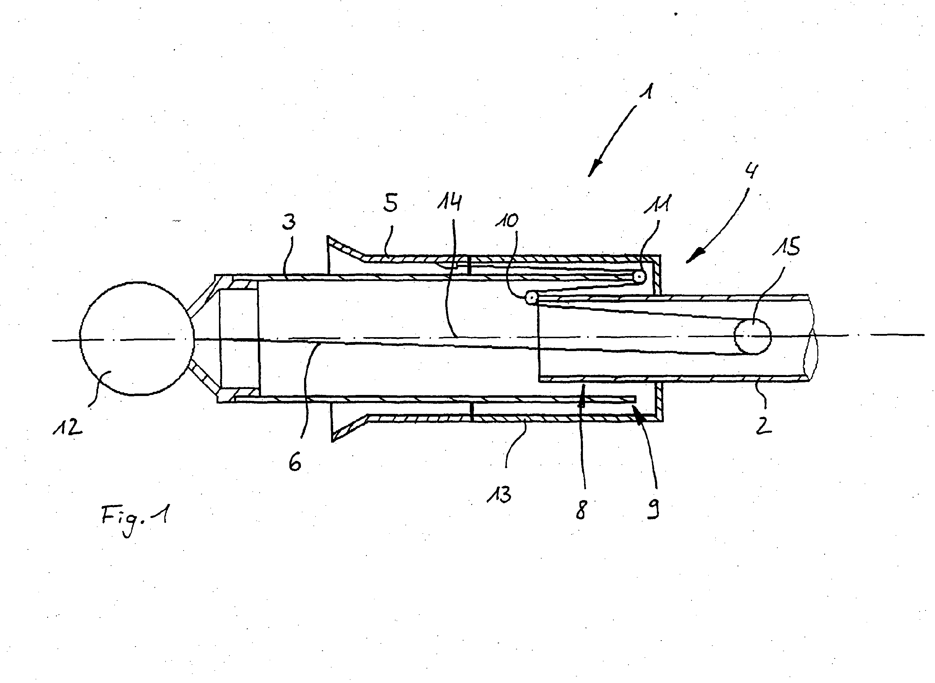

- Fig. 1: eine schematische Darstellung eines handgeführten Arbeitsgeräts mit einer erfindungsgemäßen Zumittelführung.

Ein insbesondere als Astschere ausgeführtes handgeführtes Arbeitsgerät 1 weist einen teleskopierbaren Gerätestiel 4 und eine nicht dargestellte, scherenartig ausgeführte Arbeitseinrichtung auf. Der Gerätestiel 4 umfasst zwei ineinander gesteckte Stielabschnitte 2, 3, von denen ein erster Stielabschnitt 2 in einen zweiten Stielabschnitt 3 verschiebbar und somit teleskopierbar eingeschoben ist. Die Stielabschnitte 2, 3 weisen einen im Wesentlichen rohrförmigen Querschnitt auf und sind als Strangpressteile aus Aluminium oder als geschweißte Stahlrohre hergestellt. An einer Außenfläche des zweiten Stielabschnittes 3 ist eine als Betätigungsgriff ausgeführte Schiebehülse 5 schiebebeweglich angebracht, die mit einem als Nylonschnur ausgeführten Zugmittel 6 gekoppelt ist. Die Schiebehülse 5 ist in einer Ruheposition dargestellt und kann durch Aufbringung einer Betätigungskraft längs einer Mittelachse 14 translatorisch von der Arbeitseinrichtung entfernt werden. Bei einer Schiebebewegung der Schiebehülse 5 wird eine Zugkraft auf das insbesondere bandförmige oder seilförmige Zugmittel 6 ausgeübt, das über Umlenkeinrichtungen 10, 11 mit einer der Arbeitseinrichtung gekoppelten Umlenkrolle 15 wirkverbunden ist. Das Zugmittel 6 ist über die Umlenkrolle 15 geführt und ist an einem endseitig am zweiten Stielabschnitt 3 angebrachten Zuggriff 12 befestigt.

Die Umlenkeinrichtungen 10, 11 sind jeweils als Führungsrollen ausgeführt, die drehbar an den jeweils benachbart angeordneten Stirnbereichen 8 und 9 der Stielabschnitte 2 und 3 angebracht sind und die eine nahezu reibungsfreie Umlenkung des Zugmittels 6 erlauben. Das Zugmittel 6 ist derart zwischen der Schiebehülse 5 und dem Zuggriff 12 angeordnet, dass eine translatorische Verschiebung des ersten Stielabschnittes 2 gegenüber dem zweiten Stielabschnitt 3 weder zu einer Verlängerung noch zu einer Verkürzung des Zugmittels 6 führt. Dies ist dadurch gewährleistet, dass beispielsweise bei einer Verschiebung des ersten Stielabschnitts 2 in Richtung des Zuggriffs 12 zwar eine Vergrößerung eines Abstandes zwischen den Umlenkeinrichtungen 10 und 11 stattfindet, zeitgleich nähert sich aber die am ersten Stielabschnitt 2 angebrachte Umlenkrolle 15 um den gleichen Betrag dem Zuggriff 12 an und gibt dadurch die zwischen den Umlenkeinrichtungen 10, 11 zusätzlich benötigte Zugmittellänge frei. Gleiches gilt für eine Verschiebung des ersten Stielabschnittes 2 in Richtung der Arbeitseinrichtung. Somit ist das Zugmittel 6 indifferent gegenüber einer Teleskopierung des Gerätestiels 4.

Das an der Schiebehülse 5 angebrachte Zugmittel 6 verläuft bis zum Stirnbereich 9 des zweiten Stielabschnittes 3 außerhalb des Gerätestiels 4, um eine möglichst einfache und kompakte Gestaltung der Stielabschnitte 2, 3 zu gewährleisten. Damit dennoch ein zuverlässiger Schutz für das Zugmittel 6 sichergestellt werden kann, ist eine Außenhülse 13 endseitig an dem zweiten Gerätestiel 3 angebracht. Die Außenhülse 13 umgreift den Stirnbereich 9 des zweiten Stielabschnittes 3 in der Art einer Endhülse. Die Außenhülse 13 kann neben der Abdeckung des Zugmittels 6 in der Art eines Zugmittelkanals auch als Anschlag für die Begrenzung einer Schiebebewegung der Schiebehülse 5 dienen, inbesondere als Anschlag für die Schiebehülse in einer Ruhestellung.

Die Führung des Zugmittels 5 im Gerätestiel 4 kann auch dadurch charakterisiert werden, dass eine dem zweiten Stielabschnitt 3 zugeordnete Umlenkeinrichtung 11 in axialer Richtung näher an der Arbeitseinrichtung angeordnet ist als eine dem ersten Stielabschnitt 2 zugeordnete Umlenkeinrichtung 10, wobei die Arbeitseinrichtung nur mittelbar über die Umlenkrolle 15 mit dem Zugmittel 6 gekoppelt ist.

Bei einer nicht dargestellten Ausführungsform der Erfindung ist die Außenhülse als langgestreckter, kastenförmiger Zugbandkanal auf den zweiten Stielabschnitt aufgeclipst und deckt somit die Umlenkeinrichtung und das Zugmittel zumindest abschnittsweise ab.

## Patentansprüche

1. Handgeführtes Arbeitsgerät (1), insbesondere Astschere, mit einem schlanken, lang gestreckten Gerätestiel (4), der zumindest zwei teleskopierbar ineinander schiebbare Stielabschnitte (2, 3) aufweist,
wobei an einem Endbereich eines ersten Stielabschnitts (2) zumindest eine bewegbare Arbeitseinrichtung und an einer Außenfläche eines zweiten Stielabschnitts (3) zumindest ein relativ zum zweiten Stielabschnitt (3) beweglich angebrachter Betätigungsgriff (5) vorgesehen ist, der mittels eines flexiblen Zugmittels (6) mit der Arbeitseinrichtung verbunden ist, um eine Übertragung von Betätigungskräften auf die Arbeitseinrichtung zu ermöglichen,
wobei eine Umlenkung des Zugmittels (5) an benachbart angeordneten Stirnbereichen (10, 11) der Stielabschnitte (2, 3) vorgesehen ist, um einen Längenausgleich des Zugmittels (6) bei einer Längenänderung des Gerätestiels (4) zu gewährleisten,
**dadurch gekennzeichnet,**
**dass** das Zugmittel (6) im von der Arbeitseinrichtung abgewandten Endbereich des zweiten Stielabschnitts (3) an einem bewegbar zum zweiten Stielabschnitt (3) angebrachten Zuggriff (12) angebracht ist.

2. Arbeitsgerät nach Anspruch 1, **dadurch gekennzeichnet, dass** an den Stirnbereichen (8, 9) der benachbart zueinander angeordneten Stielabschnitte (2,3) jeweils Umlenkeinrichtungen (10, 11), insbesondere Umlenkrollen, für eine Umlenkung des Zugmittels (6) vorgesehen sind.

3. Arbeitsgerät nach Anspruch 1 oder 2, **dadurch gekennzeichnet, dass** der Arbeitseinrichtung eine Umlenkeinrichtung (15) für eine Umlenkung des Zugmittels (6) zugeordnet ist.

4. Arbeitsgerät nach Anspruch 3, **dadurch gekennzeichnet, dass** für das Zugmittel (6) zwischen einer Befestigung am Betätigungsgriff (5) und einer dem zweiten Stielabschnitt (3) zugeordneten Befestigung zumindest drei Umlenkungen um jeweils zumindest nahezu 180 Grad vorgesehen sind.

5. Arbeitsgerät nach Anspruch 2, **dadurch gekennzeichnet, dass** der erste Stielabschnitt (2) mit einer zumindest teilweise über seine Längserstreckung vorgesehenen Profilierung versehen ist, die als Aufnahmeschacht für die radial nach innen weisende Umlenkeinrichtung (11) des zweiten Stielabschnittes (3) und für das Zugmittel (6) vorgesehen ist.

6. Arbeitsgerät nach Anspruch 2, **dadurch gekennzeichnet, dass** das Zugmittel (6) zumindest nahezu vollständig im Gerätestiel (4) geführt ist.

7. Arbeitsgerät nach einem der vorhergehenden Ansprüche, **dadurch gekennzeichnet, dass** dem zweiten Stielabschnitt (3) ein Zugmittelkanal (13) zugeordnet ist, der für eine zumindest teilweise Abdeckung des in Richtung des Betätigungsgriffs (5) verlaufenden Zugmittels (6) vorgesehen ist.

8. Arbeitsgerät nach Anspruch 7, **dadurch gekennzeichnet, dass** der Zugmittelkanal als Außenhülse (13) ausgeführt ist, die den zweiten Stielabschnitt (3) bereichsweise umgibt und dass das Zugmittel (6) abschnittsweise zwischen der Außenhülse (13) und dem zweiten Stielabschnitt (3) geführt ist.

9. Arbeitsgerät nach Anspruch 7 oder 8, **dadurch gekennzeichnet, dass** der Zugmittelkanal, insbesondere die Außenhülse (13), als Anschlag zur Begrenzung eines Schiebeweges des Betätigungsgriffs (5) vorgesehen ist.

10. Arbeitsgerät nach Anspruch 1, **dadurch gekennzeichnet, dass** das Zugmittel (6) ausschließlich am Betätigungsgriff (5) und am Zuggriff (12) befestigt ist.

11. Handgeführtes Arbeitsgerät (1) nach einem der vorhergehenden Ansprüche, mit einem schlanken, lang gestreckten Gerätestiel (4), wobei an einem ersten Endbereich des Gerätestiels (4) zumindest eine bewegbare Arbeitseinrichtung und an einem davon abgewandten Endbereich zumindest ein relativ zum Gerätestiel (4) beweglich angebrachter Betätigungsgriff (5) vorgesehen ist, der mittels eines flexiblen Zugmittels (6) mit der Arbeitseinrichtung verbunden ist, um eine Übertragung von Betätigungskräften auf die Arbeitseinrichtung zu ermöglichen, **dadurch gekennzeichnet, dass** der zwischen einer Ruhestellung und einer Funktionsstellung verschiebbare Betätigungsgriff (5), in zumindest einer Arretierungsstellung an dem Gerätestiel (4) festlegbar ist.

12. Arbeitsgerät nach Anspruch 11, **dadurch gekennzeichnet, dass** dem Zugmittel (6) und/oder dem Betätigungsgriff (5) ein Zugmittelabschnitt zugeordnet ist, der für eine Festlegung des Betätigungsgriffs (5) in der Arretierstellung, insbesondere in der Funktionsstellung, vorgesehen ist.

13. Arbeitsgerät nach Anspruch 11, **dadurch gekennzeichnet, dass** eine Riegeleinrichtung für eine Arretierung des Betätigungsgriffs (5) an dem Gerätestiel (2, 3) vorgesehen ist.

## Claims

1. Handheld work apparatus (1), in particular branch shears, having a narrow, elongate apparatus handle (4) which has at least two handle sections (2, 3) that are slidable one into the other in a telescopic manner,
wherein at least one movable work device is provided in an end region of a first handle section (2) and at least one operating grip (5) that is fitted in a movable manner relative to a second handle section (3) is provided on an outer surface of the second handle section (3), said operating grip (5) being connected to the work device by means of a flexible traction means (6) in order to allow transmission of operating forces to the work device,
wherein a deflection of the traction means (5) is provided on adjacently arranged handle regions (10, 11) of the handle sections (2, 3) in order to ensure length adjustment of the traction means (6) in the event of a change in length of the apparatus handle (4),
**characterized**
**in that** the traction means (6) is fitted in the end region, remote from the work device, of the second handle section (3) on a traction grip (12) that is fitted in a movable manner with respect to the second handle section (3).

2. Work apparatus according to Claim 1, **characterized in that** deflection devices (10, 11), in particular deflection rollers, for deflecting the traction means (6) are provided in each of the end regions (8, 9) of the handle sections (2, 3) that are arranged adjacent to one another.

3. Work apparatus according to Claim 1 or 2, **characterized in that** the work device is assigned a deflection device (15) for deflecting the traction means (6).

4. Work apparatus according to Claim 3, **characterized in that** at least three deflections through in each case at least virtually 180 degrees are provided for the traction means (6) between an attachment to the operating grip (5) and an attachment assigned to the second handle section (3).

5. Work apparatus according to Claim 2, **characterized in that** the first handle section (2) is provided with profiling provided at least partially along its longitudinal extent, said profiling being provided as a receiving shaft for the radially inwardly directed deflection device (11) of the second handle section (3) and for the traction means (6).

6. Work apparatus according to Claim 2, **characterized in that** the traction means (6) is guided at least virtually entirely in the apparatus handle (4).

7. Work apparatus according to one of the preceding claims, **characterized in that** the second handle section (3) is assigned a traction-means channel (13) which is provided for at least partially covering the traction means (6) extending in the direction of the operating grip (5).

8. Work apparatus according to Claim 7, **characterized in that** the traction-means channel is embodied as an outer sleeve (13) which regionally surrounds the second handle section (3), and **in that** the traction means (6) is guided sectionally between the outer sleeve (13) and the second handle section (3).

9. Work apparatus according to Claim 7 or 8, **characterized in that** the traction-means channel, in particular the outer sleeve (13), is provided as a stop for limiting a sliding travel of the operating grip (5).

10. Work apparatus according to Claim 1, **characterized in that** the traction means (6) is attached exclusively to the operating grip (5) and to the traction grip (12).

11. Handheld work apparatus (1) according to one of the preceding claims, having a narrow, elongate apparatus handle (4), wherein at least one movable work device is provided in a first end region of the apparatus handle (4) and at least one operating grip (5) that is fitted in a movable manner relative to a second handle section (3) is provided in an end region remote from said first end region, said operating grip (5) being connected to the work device by means of a flexible traction means (6) in order to allow transmission of operating forces to the work device, **characterized in that** the operating grip (5), which is slidable between a rest position and a functional position, is fixable in at least one locked position on the apparatus handle (4).

12. Work apparatus according to Claim 11, **characterized in that** the traction means (6) and/or the operating grip (5) is assigned a traction-means section which is provided for fixing the operating grip (5) in the locked position, in particular in the functional position.

13. Work apparatus according to Claim 11, **characterized in that** a latch device for locking the operating grip (5) on the apparatus handle (2, 3) is provided.

## Revendications

1. Outil de travail à main (1), en particulier sécateur, comprenant un manche d'outil (4) mince et allongé, lequel comprend au moins deux portions de manche (2, 3) pouvant coulisser les unes dans les autres de manière télescopique,
au moins un dispositif de travail mobile étant prévu au niveau d'une région d'extrémité de la première portion de manche (2) et au moins une poignée d'actionnement (5) montée mobile par rapport à la deuxième portion de manche (3) étant prévue sur une surface extérieure d'une deuxième portion de manche (3), laquelle poignée d'actionnement est reliée au dispositif de travail par l'intermédiaire d'un moyen de traction flexible (6), afin de permettre une transmission de forces d'actionnement au dispositif de travail, une déviation du moyen de traction (5) au niveau de régions frontales (10, 11) disposées de manière adjacente des portions de manche (2, 3) étant prévue, afin de garantir une compensation de longueur du moyen de traction (6) en cas de modification de la longueur du manche d'outil (4),
**caractérisé en ce que**
le moyen de traction (6) est, dans la région d'extrémité opposée au dispositif de travail de la deuxième portion de manche (3), monté sur une poignée de traction (12) montée de manière mobile par rapport à la deuxième portion de manche (3).

2. Outil de travail selon la revendication 1, **caractérisé en ce qu'**au niveau des régions frontales (8, 9) des portions de manche (2, 3) disposées de manière adjacente l'une par rapport à l'autre, sont prévus des dispositifs de déviation (10, 11) respectifs, en particulier des rouleaux de déviation, pour une déviation du moyen de traction (6).

3. Outil de travail selon la revendication 1 ou 2, **caractérisé en ce qu'**un dispositif de déviation (15) pour une déviation du moyen de traction (6) est associé au dispositif de travail.

4. Outil de travail selon la revendication 3, **caractérisé en ce qu'**au moins trois déviations de respectivement au moins presque 180 degrés sont prévues pour le moyen de traction (6) entre une fixation à la poignée d'actionnement (5) et une fixation associée à la deuxième portion de manche (3).

5. Outil de travail selon la revendication 2, **caractérisé en ce que** la première portion de manche (2) est pourvue d'un profilage prévu au moins partiellement sur son étendue longitudinale, lequel profilage est prévu en tant que conduit de réception pour le dispositif de déviation (11), orienté radialement vers l'intérieur, de la deuxième portion de manche (3) et pour le moyen de traction (6).

6. Outil de travail selon la revendication 2, **caractérisé en ce que** le moyen de traction (6) est guidé au moins presque entièrement dans le manche d'outil (4).

7. Outil de travail selon l'une quelconque des revendications précédentes, **caractérisé en ce qu'**un canal de moyen de traction (13) est associé à la deuxième portion de manche (3), lequel canal de moyen de traction est prévu pour un recouvrement au moins partiel du moyen de traction (6) s'étendant dans la direction de la poignée d'actionnement (5).

8. Outil de travail selon la revendication 7, **caractérisé en ce que** le canal de moyen de traction est réalisé sous forme de manchon extérieur (13) qui entoure dans certaines régions la deuxième portion de manche (3), et **en ce que** le moyen de traction (6) est guidé par portions entre le manchon extérieur (13) et la deuxième portion de manche (3).

9. Outil de travail selon la revendication 7 ou 8, **caractérisé en ce que** le canal de moyen de traction, en particulier le manchon extérieur (13), est prévu en tant que butée pour la limitation d'un trajet de coulissement de la poignée d'actionnement (5).

10. Outil de travail selon la revendication 1, **caractérisé en ce que** le moyen de traction (6) est fixé exclusivement à la poignée d'actionnement (5) et à la poignée de traction (12).

11. Outil de travail à main (1) selon l'une quelconque des revendications précédentes, comprenant un manche d'outil (4) mince et allongé, au moins un dispositif de travail mobile étant prévu au niveau d'une première région d'extrémité du manche d'outil (4) et au moins une poignée d'actionnement (5) montée mobile par rapport au manche d'outil (4) étant prévue au niveau d'une région d'extrémité opposée à celle-ci, laquelle poignée d'actionnement est reliée au dispositif de travail par l'intermédiaire d'un moyen de traction flexible (6), afin de permettre une transmission de forces d'actionnement au dispositif de travail, **caractérisé en ce que** la poignée d'actionnement (5) pouvant coulisser entre une position de repos et une position fonctionnelle peut être fixée dans au moins une position de blocage sur le manche d'outil (4).

12. Outil de travail selon la revendication 11, **caractérisé en ce qu'**une portion de moyen de traction est associée au moyen de traction (6) et/ou à la poignée d'actionnement (5), laquelle portion de moyen de traction est prévue pour une fixation de la poignée d'actionnement (5) dans la position de blocage, en particulier dans la position fonctionnelle.

13. Outil de travail selon la revendication 11, **caractérisé en ce qu'**un dispositif de verrouillage pour un blocage de la poignée d'actionnement (5) sur le manche d'outil (2, 3) est prévu.
